**Europäisches Patentamt**

**European Patent Office**

**Office européen des brevets**

(11) Veröffentlichungsnummer : **0 070 869**
**B1**

(12) **EUROPÄISCHE PATENTSCHRIFT**

(45) Veröffentlichungstag der Patentschrift :
**09.10.85**

(21) Anmeldenummer : **82900540.4**

(22) Anmeldetag : **21.01.82**

(86) Internationale Anmeldenummer :
**PCT/EP 82/00007**

(87) Internationale Veröffentlichungsnummer :
**WO/8202567 (05.08.82 Gazette 82/19)**

(51) Int. Cl.⁴ : **D 21 F 3/02, D 21 F 3/08**

(54) **PRESSWALZE FÜR BANDFÖRMIGES GUT.**

(30) Priorität : **27.01.81 DE 3102526**

(43) Veröffentlichungstag der Anmeldung :
**09.02.83 Patentblatt 83/06**

(45) Bekanntmachung des Hinweises auf die Patenterteilung : **09.10.85 Patentblatt 85/41**

(84) Benannte Vertragsstaaten :
**AT FR GB SE**

(56) Entgegenhaltungen :
**DE-A- 1 923 784**
**FR-A- 2 046 560**
**FR-A- 2 219 836**
**GB-A-    641 466**
**GB-A- 1 118 588**
**GB-A- 2 057 027**

(73) Patentinhaber : **J.M. Voith GmbH**
**Postfach 1940 St. Pöltener Strasse 43**
**D-7920 Heidenheim (DE)**

(72) Erfinder : **HAUSER, Ludwig**
**Hansegisreute 10**
**D-7920 Heidenheim (DE)**
Erfinder : **WANKE, Wilhelm**
**Donauschwabenstrasse 47**
**D-7920 Heidenheim (DE)**

## Beschreibung

Die Erfindung betrifft eine Preßwalze für bandförmiges Gut, die mit einer Gegenwalze zusammenwirkt, im einzelnen mit den Merkmalen, die im Oberbegriff des Anspruchs 1 angegeben sind.

Es ist bekannt, in Papiermaschinen Entwässerungspressen mit in Bahnlaufrichtung verlängerter Preßzone anzuwenden, um die Entwässerung, verglichen mit der Wirkung normaler Preßwalzen, wesentlich zu erhöhen. Bei graphischen Papieren z. B. kann auf diese Weise der Trockengehalt der Bahn von 40 bis 45 % atro auf 55 bis 60 % atro erhöht werden. Bei hygienischen Papieren ist es bedeutsam, daß neben der Steigerung des Trockengehaltes das Produkt bezüglich geforderter Weichheit durch eine in Bahnlaufrichtung verlängerte Preßzone positiv beeinflußt werden kann.

Aus der DE-B-25 22 657 ist eine Preßwalze bekannt, auf deren drehbarem festen Walzenmantel (Innenmantel) ein gummielastisch verformbarer Außenmantel vorgesehen ist und die vorzugsweise für die Anwendung als Presseurwalze im Rotationsdruck bestimmt ist. Beim Zusammenwirken dieser Preßwalze mit einer Gegenwalze wird zwar eine in Bahnlaufrichtung verlängerte Preßzone erhalten. Sie ist jedoch nicht für einen höheren Druck geeignet, wie er insbesondere bei der Entwässerung von Papierbahnen notwendig ist. Die obere Druckgrenze liegt bei ca. 25 kp/cm, und die Standzeit des Gummiüberzuges (Außenmantels) ist sehr gering, weil er sich im Betrieb erwärmt.

Zur Erzielung einer in Bahnlaufrichtung verlängerten Preßzone mit höherem Druck ist es insbesondere im Papiermaschinenbau bekannt, den tragenden Filz mit der Papierbahn zwischen zwei über mehrere Leitwalzen umlaufenden Bändern durchzuführen, gegen die von beiden Seiten her über eine bestimmte Länge hydrostatische Druckglieder gepreßt werden. Aufgrund der besonderen Formgebung und Ausbildung der Druckglieder kann entlang der Bahn ein bestimmtes Druckprofil erhalten werden (US-A-3 808 092). Es ist ferner bekannt, ein über mehrere Leitwalzen umlaufendes Band mittels einer hydraulisch betätigten Druckleiste gegen eine umlaufende Walze zu drücken. Die Druckleiste kann als ein massiver Balken ausgebildet sein oder gemäß US-A-3 853 698 eine zu dem umlaufenden Band hin offene Ausnehmung aufweisen, die über Drosselbohrungen druckbeaufschlagbar ist. In allen diesen Fällen ist es sehr schwierig, die Vorrichtung gegen seitlichen Ölaustritt abzudichten. Selbst mit aufwendigen Abdichtungen ist eine solche Konstruktion nicht völlig dicht zu bekommen. Für den Betrieb ist dies sehr nachteilig, weil das Band bzw. die Bänder im freien Teil Schmutz ansetzen und weil die Gefahr besteht, daß die zu entwässernde Faserstoffbahn verschmutzt wird.

Diese Gefahr besteht nicht bei einer anderen bekannten Preßwalze gemäß DE-A-19 23 784, Figuren 11 und 12. Denn dort ist der gummielastische, umlaufende Außenmantel, der auf einem nichtrotierenden Tragkörper abgestützt wird, an seinen beiden Enden an je einer drehbaren, auf dem Tragkörper gelagerten Scheibe befestigt. Hierdurch ist der von dem Außenmantel umschlossene Innenraum gegen seitlichen Austritt von Druck- oder Schmierflüssigkeit abgeschlossen. Diese bekannte Anordnung hat jedoch andere Nachteile. Zur Bildung der in Bahnlaufrichtung verlängerten Preßzone sind an dem Tragkörper Dichtleisten befestigt, die eine Preßkammer begrenzen. Mit dieser Anordnung können nur verhältnismäßig niedrige Drücke zwischen dem Außenmantel und der Gegenwalze erzeugt werden. Bei Anwendung hoher Drücke würden sich nämlich die Dichtleisten zusammen mit dem Tragkörper durchbiegen, so daß Druckmittel aus der Preßkammer entweichen würde. Ein weiterer Nachteil der bekannten Konstruktion besteht darin, daß sie nur für ziemlich schmale Papiermaschinen brauchbar ist, weil zur Führung des gummielastischen Außenmantels am Tragkörper gelagerte Leitwalzen vorgesehen sind. Diese Leitwalzen können in dem sehr engen Innenraum der Anpreßwalze nur einen verhältnismäßig kleinen Durchmesser aufweisen. Deshalb biegen sich die Leitwalzen zumindest unter ihrem Eigengewicht durch, so daß die Gefahr besteht, daß sich der gummielastische Außenmantel beim Umlaufen verzieht.

Ausgehend von dem zuvor beschriebenen Gegenstand der DE-A-19 23 784 liegt der Erfindung die Aufgabe zugrunde, eine Preßwalze der im Oberbegriff des Anspruchs 1 genannten Gattung so auszubilden, daß sie die Anwendung relativ hoher Drücke zwischen dem Außenmantel und der Gegenwalze zuläßt.

Diese Aufgabe wird gemäß der Erfindung durch eine Preßwalze mit den kennzeichnenden Merkmalen des Anspruches 1 gelöst. Dadurch, daß die nichtrotierende Stützeinrichtung für den Außenmantel einen als Hohlträger ausgebildeten festen Innenmantel aufweist, ist die Stützeinrichtung wesentlich biegesteifer als diejenige der bekannten Konstruktion. Somit erleidet der Innenmantel auch bei Anwendung hoher Drücke keine oder nur eine geringe Durchbiegung. Hierdurch wird zweierlei erreicht : Einerseits wird im Zusammenwirken mit den Merkmalen der im Anspruch 1 genannten Druckleiste mit Sicherheit ein Entweichen von Druckmittel aus dem hinter der Dichtleiste befindlichen Druckraum vermieden. Andererseits kann der umlaufende, gummielastische Außenmantel, im Zusammenwirken mit den im Anspruch 1 angegebenen Merkmalen der Zuführeinrichtung für ein Gleitmittel, gleitend auf dem nichtrotierenden Innenmantel gelagert werden, wodurch die Gefahr, daß sich der Außenmantel beim Umlaufen verzieht, zumindest weitgehend beseitigt ist.

Bei Bedarf erlaubt es der als Hohlträger ausgebildete Innenmantel, daß gemäß Anspruch 5 ein sich durch das Innere des Innenmantels erstreckender Biegeträger (Joch) vorgesehen wird, auf dem der Innenmantel nach Art einer Durchbiegungseinstellwalze gelagert werden kann. Hierdurch kann der Innenmantel bei Bedarf völlig durchbiegungsfrei gehalten werden.

In jedem Fall bleibt der Vorteil der bekannten Konstruktion gemäß DE-A-19 23 784 erhalten, daß alle hydraulischen Einrichtungen innerhalb der Preßwalze abgeschlossen sind, so daß eine Verschmutzung der zu entwässernden Faserstoffbahn ausgeschlossen ist.

Eine andere aus der GB-A-641 476, Figur 1 bekannte Preßwalze hat einen Außenmantel, der auf einem nichtrotierenden Tragbalken gleitend gelagert ist. Der Außenmantel ist als ein dickwandiges metallisches Rohr ausgebildet, so daß er zum Bilden einer in Bahnlaufrichtung verlängerten Preßzone nicht geeignet ist. Der Tragbalken hat im Querschnitt die Form eines Kreisabschnittes.

Vorteilhafte Ausgestaltungen der Erfindung sind in den Unteransprüchen angegeben.

Ausführungsbeispiele der Erfindung werden nachfolgend anhand der Zeichnung beschrieben.

Die Figur 1 zeigt schematisch eine Preßwalze im Querschnitt.

Die Figur 2 zeigt einen vergrößerten Ausschnitt einer Alternativ-Ausbildung der Preßwalze im Bereich der Preßzone.

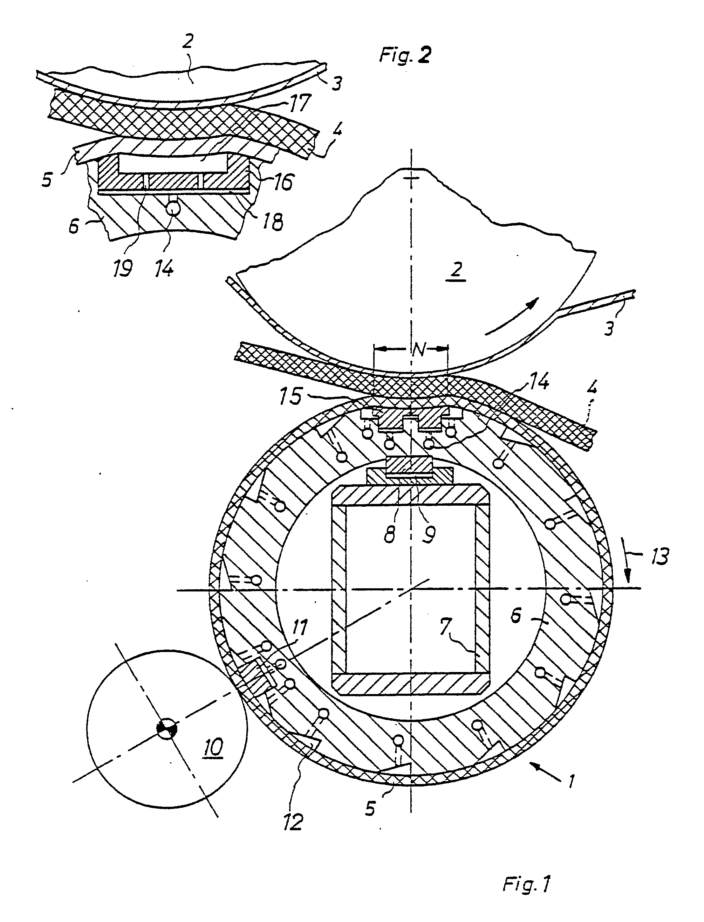

Die in Fig. 1 dargestellte Preßwalze 1 wirkt mit der Gegenwalze 2 zusammen. Die Gegenwalze 2 ist in an sich bekannter Weise als starre Walze ausgebildet. Zwischen beiden Walzen wird die Papierbahn 3 entwässert, wobei zwischen Papierbahn 3 und Preßwalze 1 ein Filz 4 angeordnet ist. In der dargestellten Figur laufen Papierbahn 3 und Filz 4 von links nach rechts.

Die Preßwalze 1 besteht aus einem äußeren elastisch verformbaren Walzenmantel 5 aus einem armierten Kunststoff, z. B. Polyurethan. Er kann auch aus einem mit Stahl- oder Textilgewebe armierten Gummi bestehen. Innerhalb dieses äußeren Mantels 5 ist ein nicht mit umlaufender Innenmantel 6 angeordnet. Dessen Durchbiegung soll möglichst gering oder sogar gleich Null sein. Deshalb ist im Inneren des Innenmantels 6 ein Biegeträger 7 (« Joch ») angeordnet, auf dem sich der Innenmantel mittels einer Vielzahl von kolbenförmigen Stempeln 8 abstützt. Jeder der Stempel 8 ist in einer auf dem Joch 7 ruhenden druckbeaufschlagbaren Kammer 9 beweglich geführt. Die Kammern 9 können mit unterschiedlichen Drücken beaufschlagt werden.

Zum Antrieb des äußeren Mantels 5 dient eine Antriebswalze 10. An der Stelle, an welcher die Antriebswalze 10 an dem Außenmantel 5 anliegt, ist an der Innenseite des Außenmantels ein hydraulisch beaufschlagbarer Gleitschuh 11 vorgesehen. Der Gleitschuh 11 kann zusammen mit der Antriebswalze 10 auch zum Nachspannen des elastischen äußeren Mantels verwendet werden, wenn sich dieser gelängt hat. Zu diesem Zweck kann das Lager der Antriebswalze in gewissen Grenzen normal zur Preßwalze 1 hydraulisch verstellbar ausgebildet sein. Auch kann die Antriebswalze 10 schräg verstellbar ausgebildet werden, um bei einem Verlaufen des elastischen äußeren Mantels diesen wieder in die richtige Lage bringen zu können. Anstatt der dargestellten einzigen Antriebswalze 10 kann auch eine zweite Antriebswalze vorgesehen sein. In diesem Fall werden die beiden Antriebswalzen vorzugsweise symmetrisch zu der Gegenwalze 2 angeordnet. Mittels zweier Antriebswalzen kann die Zugspannung des äußeren Mantels entlang der Preßzone auf einen gewünschten konstanten Wert gesteuert werden, indem z. B. die in Drehrichtung zweite Walze um einen bestimmten geringen Betrag, z. B. 1 %, schneller läuft als die erste Walze.

Der Außenmantel 5 gleitet auf der Oberfläche des Innenmantels 6. Die Ausnehmungen 12 im Innenmantel 6 dienen als Schmierkammern. Die äußere Oberfläche des Innenmantels 6 ist für den Fall eines Trockenlaufes zweckmäßigerweise beschichtet, z. B. mit Teflon. Die Kammern 12 verjüngen sich in der durch den Pfeil 13 dargestellten Drehrichtung des Außenmantels.

Der Druck in der Preßzone N wird mittels einer in Richtung radial nach außen (über Leitungen 14) druckbeaufschlagbaren Druckleiste 15 bewirkt. Anstatt der dargestellten hydrostatischen Bildung des Druckes in der Preßzone N kann dies auch hydrodynamisch erfolgen.

In dem in Fig. 2 vergrößert dargestellten Ausführungsbeispiel weist die Druckleiste 16 zum äußeren Mantel 5 hin eine Ausnehmung 17 auf, die mit dem zwischen Innenmantel 6 und Druckleiste 16 befindlichen druckbeaufschlagten Raum 18 durch Drosselleitungen 19 verbunden ist. In der Ausnehmung 17 baut sich ein Überdruck auf.

## Patentansprüche

1. Preßwalze (1) für bandförmiges Gut (3), die mit einer Gegenwalze (2) eine Preßzone (N) bildet, insbesondere zum Entwässern einer von einem Filz (4) oder Trägergewebe getragenen Faserstoffbahn (3) in einer Papiermaschine, mit einer einen gummielastischen, umlaufenden Außenmantel (5) aufweisenden Einrichtung zum Bilden einer in Bahnlaufrichtung verlängerten Preßzone (N) und mit einer nichtrotierenden Stützeinrichtung (6) zum Abstützen des Außenmantels (5) auf seinem Umlaufweg, dadurch gekennzeichnet, daß die Stützeinrichtung für den Außenmantel (5) einen als Hohlträger ausgebildeten festen Innenmantel (6) aufweist, auf dem der Außenmantel (5) gleitend gelagert ist, daß in der Preßzone (N) wenigstens eine an der Innenseite des Außenmantels (5) anliegende, von innen her druckbeaufschlagbare Druckleiste (15 ; 16) anliegt, und daß außerhalb der Preßzone (N) auf der Außenseite des Innenmantels (6) Ausnehmungen (12) zum Zuführen eines Gleitmittels vorgesehen sind.

2. Preßwalze nach Anspruch 1, dadurch gekennzeichnet, daß die Ausnehmungen (12) sich in Drehrichtung verjüngen.

3. Preßwalze nach Anspruch 1 oder 2, mit einer an den Außenmantel (5) anpreßbaren Antriebswalze (10), dadurch gekennzeichnet, daß an der Stelle, an welcher die Antriebswalze (10) gegen den Außenmantel (5) drückt, im Innenmantel (6) eine an der Innenseite des Außenmantels (5) anliegende, von innen her druckbeaufschlagbare Druckleiste (11) angeordnet ist.

4. Preßwalze nach einem der Ansprüche 1 bis 3, dadurch gekennzeichnet, daß die Druckleiste (16) in der Preßzone (N) eine zum Außenmantel (5) hin offene Ausnehmung (17) aufweist, die über durch die Druckleiste geführte Drosselbohrungen (19) druckbeaufschlagbar ist.

5. Preßwalze nach einem der Ansprüche 1 bis 4, dadurch gekennzeichnet, daß der Innenmantel (6) in an sich bekannter Weise auf einem feststehenden Joch (7) entsprechend einer Durchbiegungseinstellwalze gelagert ist.

## Claims

1. Press roll (1) for web material (3) which forms, together with a mating roll (2), a pressing zone (N) in particular for dewatering a fibrous web (3) being carried by a felt or support fabric in a paper making machine, said press roll (1) comprising a device with a rubber-like flexible rotating outer shell (5) for forming a pressing zone (N) which is extended in direction of travel of the web, further comprising a non-rotating supporting device (6) for supporting the outer shell (5) on its rotary path, characterized in that the supporting device for the outer shell (5) comprises a hollow beam formed as a stationary inner shell (6), on which the outer shell (5) is slidingly mounted, that at least one pressure bar (15 ; 16) which can be acted on by pressure from the inside rests in the pressing zone (N) against the inner side of the outer shell (5) and that recesses (12) for feeding of a lubricant are provided on the outside of the inner shell (6) outside the pressing zone (N).

2. Press roll according to claim 1, characterized in that the recesses (12) taper down in the direction of rotation.

3. Press roll according to claim 1 or 2, having a drive roll (10) which can be pressed against the outer shell, characterized in that a pressure bar (11) which rests against the inner side of the outer shell and can be acted upon by pressure from the inside, is arranged within the inner shell (6) at the place where the drive roll (10) is pressed against the outer shell (5).

4. Press roll according to one of the claims 1 to 3, characterized in that the pressure bar (16) is provided in the pressing zone (N) with a recess (17) which is open towards the outer shell (5) and can be acted upon by pressure via throttle holes (19) leading through the pressure bar.

5. Press roll according to one of the claims 1 to 4, characterized in that the inner shell (6) is supported in known manner on a stationary yoke (7) corresponding to a controlled deflection roll.

## Revendications

1. Cylindre presseur (1) pour matériaux en forme de bande (3) constituant avec un cylindre conjugué (2) une surface de contact entre cylindres (N) notamment pour l'essorage d'une feuille continue (3) en matière fibreuse supportée par un feutre (4) ou un tissu-support dans une machine à papier et comportant un agencement présentant un revêtement extérieur (5) rotatif, élastique en caoutchouc, pour former une surface de contact entre cylindres (N) prolongée dans le sens de parcours de la feuille et un agencement de support non rotatif (6) destiné à supporter le revêtement extérieur (5) sur sa trajectoire de rotation, caractérisé par le fait que l'agencement support pour le revêtement extérieur (5) présente un revêtement intérieur (6) fixe conçu en tant que support creux sur lequel le revêtement extérieur (5) est suspendu de façon à pouvoir glisser, et par le fait que dans ladite surface de contact (N) au moins une barre de pression (15, 16) pouvant admettre de la pression à partir de l'intérieur est en appui sur la face intérieure du revêtement extérieur (5), et par le fait qu'à l'extérieur de ladite surface de contact (N) sont pratiqués des évidements (12) sur le côté extérieur du revêtement intérieur (6) pour l'amenée d'un lubrifiant.

2. Cylindre presseur selon la revendication 1, caractérisé par le fait que les évidements (12) sont effilés dans le sens de la rotation.

3. Cylindre presseur selon la revendication 1 ou la revendication 2 comportant un cylindre moteur (10) pouvant prendre appui sur le revêtement extérieur (5), caractérisé par le fait qu'au point de pression du cylindre moteur (10) contre le revêtement extérieur (5) dans le revêtement intérieur (6) est disposée une barre de pression (11) pouvant admettre de la pression à partir de l'intérieur.

4. Cylindre presseur selon l'une des revendications 1 à 3, caractérisé par le fait que la barre de pression (16) sur la surface de contact entre cylindre (N) présente un évidement ouvert (17) vers le revêtement extérieur (5) pouvant admettre de la pression par l'intermédiaire d'orifices d'étranglement (19) percés dans la barre de pression.

5. Cylindre presseur selon l'une des revendications 1 à 4, caractérisé par le fait que le revêtement intérieur (6) est suspendu de façon connue en soi sur un support stationnaire (7) correspondant à un cylindre de réglage de pression.

# 0 070 869

Fig. 2

Fig. 1